Europäisches Patentamt

European Patent Office

Office européen des brevets

(11) Veröffentlichungsnummer: **0 469 398 A1**

## EUROPÄISCHE PATENTANMELDUNG

(21) Anmeldenummer: **91112001.2**

(22) Anmeldetag: **18.07.91**

(51) Int. Cl.5: **F16N 29/02**, F16N 7/38, F04B 13/00

(30) Priorität: **30.07.90 DE 9011168 U**

(43) Veröffentlichungstag der Anmeldung:
**05.02.92 Patentblatt 92/06**

(84) Benannte Vertragsstaaten:
**AT BE CH DE DK ES FR GB GR IT LI LU NL SE**

(71) Anmelder: **BAIER & KÖPPEL GMBH & CO.**
**Präzisionsapparate**
**Beethovenstrasse 14**
**W-8570 Pegnitz(DE)**

(72) Erfinder: **Brendel, Jürgen**
**Dr.-Hans-Brand-Ring 7**
**W-8573 Pottenstein(DE)**

(74) Vertreter: **Richter, Bernhard, Dipl.-Ing.**
**Beethovenstrasse 10**
**W-8500 Nürnberg 20(DE)**

(54) Anordnung an einer, oder für eine Zentralschmieranlage.

(57) Die Erfindung geht aus von einer Anordnung aus Schmiermittelpumpe (3) und deren elektrischen Antriebsmotor (2) an einer oder für eine Zentralschmieranlage, sowie dazugehöriger Steuerung der Versorgung der Zentralschmieranlage mit der jeweils erforderlichen Schmiermittelmenge durch Änderung der Laufdauer der Schmiermittelpumpe. Um eine Steuerung der Laufdauer der Pumpe zu erreichen, die sich stufenlos den jeweils vorliegenden Bedingungen der Praxis anpaßt sind vorgesehen: Eine Erfassung der Drehzahl der mit dem Antriebsmotor (2) schlupffrei auf Drehmitnahme verbundenen Schmiermittelpumpe (3), ein Einsatz eines in seiner Drehzahl von der jeweiligen Belastung durch die Schmiermittelpumpe (3) abhängigen Elektromotors (2), und eine Steuereinrichtung (28) mit einem Aufbau und einer Einstellung derart, daß bei Zunahme (Abnahme) der Drehzahl der Einheit aus Antriebsmotor (2) und Pumpe (3) sich die Laufdauer dieser, die Pumpe mit umfassenden Einheit verringert (vergrößert).

Fig.1

Die Erfindung betrifft eine Anordnung aus Schmiermittelpumpe und deren elektrischen Antriebsmotor an einer oder für eine Zentralschmieranlage, sowie dazugehöriger Steuerung der Versorgung der Zentralschmieranlage mit der jeweils erforderlichen Schmiermittelmenge durch Änderung der Laufdauer der Schmiermittelpumpe (Oberbegriff des Anspruches 1). Derart ausgerüstete Zentralschmieranlagen sind beispielsweise aus DE-Gbm 89 01 914 und 89 01 915 bekannt. Im erstgenannten Fall erfolgt eine Veränderung der Laufzeit des Pumpenaggregates in Abhängigkeit von der Umgebungstemperatur und vom Penetrationsverhalten des Schmierfettes und bei der zweitgenannten Literaturstelle in Abhängigkeit von der jeweils ermittelten Höhe des Anlaufstromes des elektrischen Antriebsmotors. Beide vorgenannten Literaturstellen sollen das Problem lösen, daß einerseits bei ungünstigem Penetrationsverhalten des Schmiermittels, insbesondere bei Vorliegen niedriger Temperaturen im Winterbetrieb, eine ausreichende Versorgung der Schmierstellen durch entsprechend lange Laufzeiten der Pumpenaggregate möglich ist, andererseits bei höheren Temperaturen, insbesondere Sommerbetrieb, die Laufzeiten demgegenüber zu reduzieren sind. Diese Problemstellung wird aber bei den angegebenen Literaturstellen nur unvollkommen gelöst. Eine Einstellung der Pumpenlaufzeit durch Temperaturfühlung ist ungenau, da sie nur von der jeweiligen Außentemperatur ausgehen kann. Maßgeblich für die Pumpenlaufzeit ist aber der jeweilige Widerstand, den das Schmiermittel innerhalb der Zentralschmieranlage seiner Bewegung durch die Leitungen usw. der Zentralschmieranlage den von der Pumpe herrührenden Druckkräften entgegensetzt. Außerdem ist die für die Praxis dort vorgesehene Einstellung der Laufzeit des Pumpenaggregates in zwei Stufen zu grob und kann die unterschiedlichen Betriebsverhältnisse nicht hinreichend erfassen. Die Lösung, die Pumpenlaufzeit über den Anlaufstrom zu regeln, ist mit dem Nachteil verbunden, daß der Anlaufstrom nur sehr kurzfristig, in der Regel nicht mehr als 1 sec, zu seiner Messung zur Verfügung steht, während sich dann der normale Dauerstrom des Elektromotors einstellt. Über eine so kurze Zeit ist ein meßtechnisch nur bedingt verwendbarer Mittelwert des Anlaufstromes festzustellen und auszuwerten. Insbesonders wirken sich bei derart kurzen Anlaufzeiten die Stromschwankungen durch das Überlaufen der Lamellen des Kollektors nachteilig aus.

In der Praxis war es vielfach üblich, die Laufzeit der Pumpe auf den maximal notwendigen Wert einzustellen, der auch unter ungünstigen Temperaturverhältnissen und/oder bei einem Schmiermittel mit schlechterem Fließverhalten eine einwandfreie Funktion (Abschmieren aller Lagerstellen) gewährleistet. Dann aber läuft die Pumpe bei besseren Temperaturverhältnissen und/oder bei Schmiermitteln mit günstigerem Fließverhalten eine an sich wesentlich längere Laufzeit, als für die bestehenden Betriebsverhältnisse notwendig ist, um eine ordnungsgemäße Schmierung aller Lagerstellen zu sichern. Bei Zentralschmieranlagen und insbesondere bei Einleitungsanlagen kommt es somit im Falle eines Hauptleitungsbruchs zu einem Austritt von erheblichen Mengen Schmiermittels mit allen Konsequenzen für die Umwelt und Fahrzeug. Außerdem wird durch die maximale Pumpenlaufzeit das Bordnetz (Lichtmaschine/Batterie) des Fahrzeuges unnötig belastet. Schließlich ist dadurch auch der Nachteil eines unnötigen Verschleisses der Pumpe und deren Antriebsmotors gegeben.

Die Aufgabe, bzw. Problemstellung der Erfindung geht von einer Anordnung gemäß dem eingangs angegebenen Oberbegriff des Anspruches 1 aus. Dabei ist insbesondere (aber nicht ausschließlich) an solche Anordnungen und Zentralschmieranlagen gedacht, die für Nutzfahrzeuge verwendet werden. Es soll eine Steuerung der Laufdauer der Pumpe erreicht werden, die sich stufenlos den jeweils vorliegenden Bedingungen der Praxis anpaßt.

Die Lösung dieser Aufgabe bzw. Problemstellung wird, ausgehend vom Oberbegriff des Anspruches 1, zunächst in folgenden Merkmalen:

a - eine Erfassung der Drehzahl der mit dem Antriebsmotor schlupffrei auf Drehmitnahme verbundenen Schmiermittelpumpe,

b - Einsatz eines in seiner Drehzahl von dar jeweiligen Belastung durch die Schmiermittelpumpe abhängigen Elektromotors,

c - eine Steuereinrichtung mit einem Aufbau und einer Einstellung derart, daß bei Zunahme (Abnahme) der Drehzahl der Einheit aus Antriebsmotor und Pumpe sich die Laufdauer dieser, die Pumpe mit umfassenden Einheit verringert (vergrößert).

gesehen (kennzeichnender Teil des Anspruches 1). Bei einem Elektromotor, dessen Drehzahl von der jeweiligen Belastung abhängt, bevorzugt ist dabei gemäß Anspruch 4 an einen Gleichstrom-Reihenschlußmotor gedacht, ist die sich an ihm einstellende Drehzahl ein sicheres und steuerungstechnisch mit genügender Genauigkeit erfaßbares Maß für die Belastung durch das Pumpenaggregat. Aufgrund der schlupfreien Koppelung des Antriebsmotors mit dem Pumpenaggregat ist die Motordrehzahl entweder genau gleich der Pumpendrehzahl oder steht dazu in einem festen Verhältnis. Somit erfaßt die Steuereinrichtung über das Messen der jeweiligen Drehzahl mit großer Genauigkeit die jeweilige Belastung, seitens der Pumpe für das Hindurchdrücken des Schmiermittels durch die Zentralschmieranlage. Diese Belastung ist z.B. bei niedrigen Temperaturen entsprechend größer als bei höheren Temperaturen. Desgleichen wird die Belastung größer, wenn ein Schmiermittel höherer Viskosität verwendet wird. Diese beiden Faktoren, nämlich Temperatur und Viskosität des Schmiermittels bedingen weitgehend die Zeit, welche die Pumpe für die Einbringung der notwendigen Schmiermittelmenge in die Zentralschmieranlage benötigt. Diese Zeit wird nun durch die Steuereinrichtung gemäß vorgenanntem Merkmal c des Kennzeichens des Anspruches 1 eingestellt. Im Gegensatz zu der Lösung der beiden eingangs erläuterten Literaturstellen ist die Anordnung und Steuerung nach der Erfindung sehr genau. Da sich die Drehzahl des Antriebsmotors stufenlos mit der jeweiligen Belastung durch die Pumpe ändert, erfolgt vorteilhafterweise eine entsprechende stufenlose Steuerung der Laufdauer des Pumpenantriebs. Die bevorzugte Ausführung des Antriebsmotors als Gleichstrom-Reihenschlußmotor zeichnet sich durch starke Abhängigkeit der Motordrehzahl von der Motorbelastung aus. Wie bereits erwähnt, ist die Erfindung aber nicht auf die Verwendung dieses bestimmten Motorentypes beschränkt. Gegenüber den zuletzt zum Stand der Technik erläuterten

Anordnungen ergeben sich die Vorteile eines erhöhten Umweltschutzes (Geringerer Austritt von Schmierstoffmengen bei Hauptleitungsbruch), Vorteil einer reduzierten Belastung des Bordnetzes (Lichtmaschine, Batterie) und weniger Verschleiß am Pumpenaggregat (Antriebmotor und Bauteile).

Bei besonders ungünstigen Verhältnissen, nämlich relativ niedrigen Außentemperaturen und zugleich Verwendung eines Schmiermittels hoher Viskosität empfiehlt sich eine Anordnung gemäß den Merkmalen des Anspruches 8, nämlich eine Erfassung des Dauerstromes des Elektromotors und durch eine Ausgestaltung der Steuereinrichtung derart, daß sie über einen Regelkreis und einen Leistungsteil den Dauerstrom auf einen einstellbaren Maximalwert begrenzt. Durch diese Begrenzung des Dauerstromes des Antriebsmotors wird bei Vorliegen der geschilderten ungünstigen Betriebsverhältnisse die Drehzahl der Pumpe auf einen entsprechenden Wert begrenzt. Dies hat zur Folge, daß das Schmiermittel von der Pumpe langsamer als sonst üblich durch die Schmieranlage hindurchgedrückt wird. Dies hat den Vorteil, daß auch ein Schmiermittel mit ungünstigem Fließverhalten die vorgesehenen Schmierräume, Schmieröffnungen usw. voll ausfüllen kann.

Weitere Vorteile und Merkmale der Erfindung sind den weiteren Unteransprüchen, auf deren Inhalt hiermit ausdrücklich Bezug genommen wird, sowie der nachfolgenden Beschreibung und der zugehörigen Zeichnung von erfindungsgemäßen Ausführungsmöglichkeiten zu entnehmen. In der im wesentlichen schematischen Zeichnung zeigt:

Fig. 1: eine Anordnung nach der Erfindung mit, blockartiger Darstellung der einzelnen Bauelemente und Aggregate, sowie deren Verbindungsleitungen,

Fig. 2: eine Prinzipdarstellung der Drehzahlerfassung,

Fig. 3: eine Ausführungsform einer Drehzahlerfassung nach Fig. 2,

Fig. 4: eine prinzipielle Darstellung weiterer Möglichkeiten der Drehzahlerfassung.

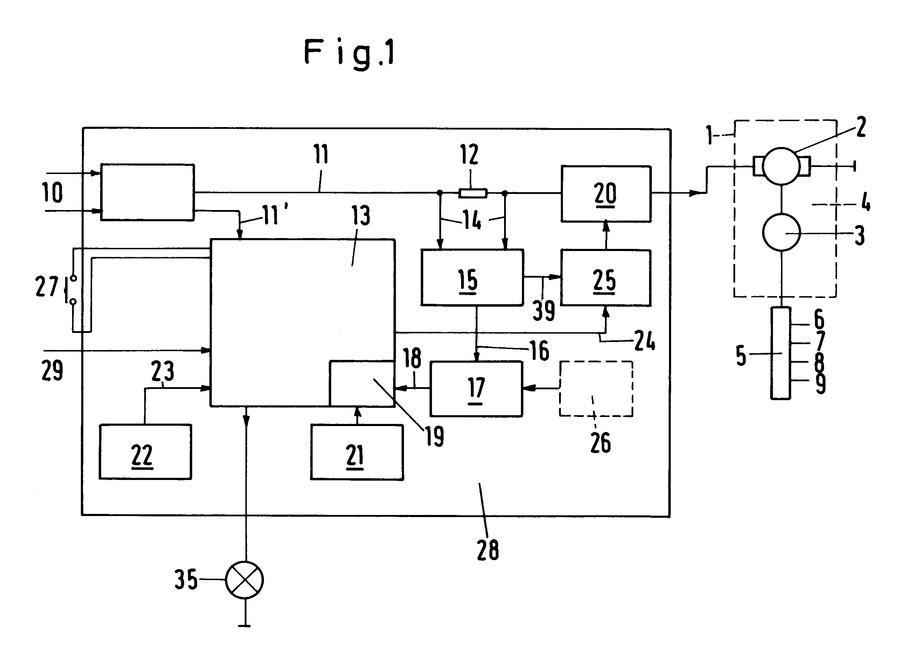

Gemäß Fig. 1 ist z.B. über oder unter einem Schmiermittelbehälter 1 ein Reihenschluß-Gleichstrommotor 2 und eine Schmiermittelförderpumpe 3 vorgesehen, die entweder direkt oder über eine Koppelung 4 auf Drehmitnahme verbunden sind.

Eine etwaige Koppelung, z.B. ein Getriebe, ist schlupffrei, so daß die Drehzahl des Motors 2 entweder gleich der Drehzahl der Pumpe 3 ist oder zumindest zu deren Drehzahl in einem fixen Verhältnis steht. Vom Pumpenaggregat führen nur schematisch angedeutete Leitungen zu einem Schmierstoffverteiler 5. Die hiervon mit Schmiermittel versorgten Schmierleitungen sind mit den Ziffern 6 bis 9 gekennzeichnet. Solche Zentralschmieranlagen sind vor allen Dingen zum Einsatz bei Fahrzeugen und dabei insbesondere bei größeren Nutzfahrzeugen gedacht.

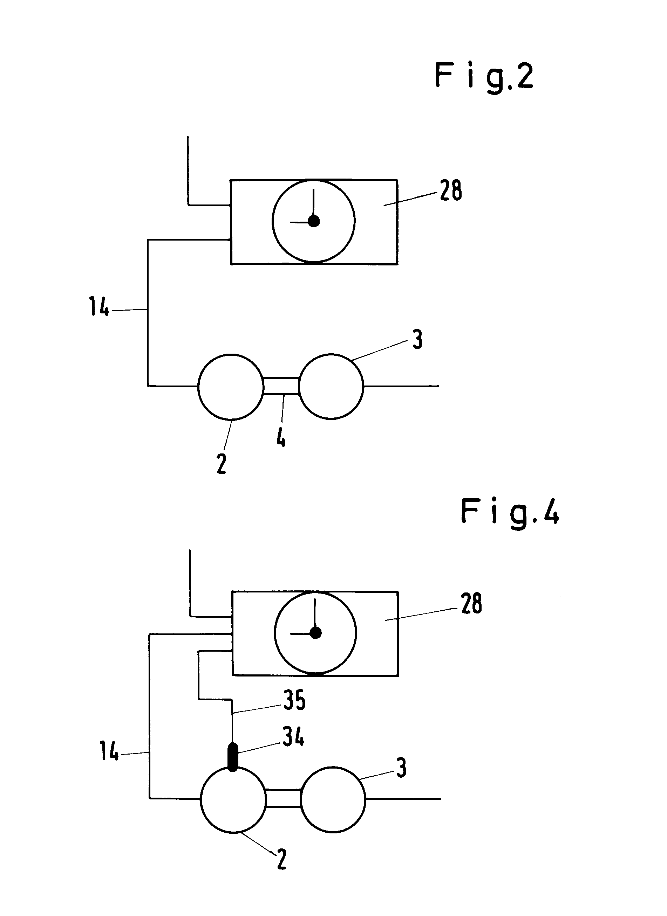

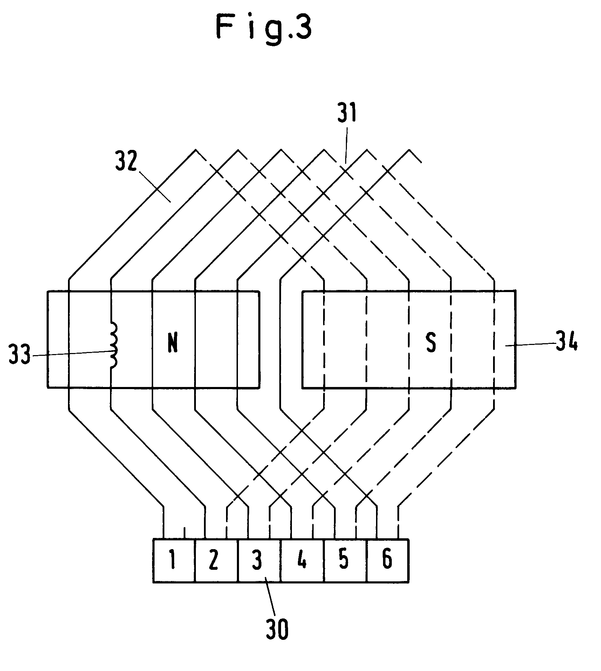

Die Bordspannung liegt bei 10 an, wobei die Motorzuleitung 11 über einen Stromfühler 12 und einen Leistungsteil 20 dem Motor 2 zugeführt wird. Eine weitere Stromleitung 11' führt zu der noch näher zu erläuternden Zentral-Einheit 13. Am Stromfühler 12 erfolgt eine Messung des Stromes. Sie wird über die Leitungen 14 der Dauerstromerfassung 15 zugeführt. Falls gemäß dem Ausführungsbeispiel der Fig. 2 und 3 sich die Drehzahl der Motor-Pumpenaggregateinheit aus dem Verlauf des Dauerstromes des Motors 1 ergibt, wird über eine weitere Leitung 16 bei 17 die Ist-Drehzahl der Pumpe erfaßt und gemäß Ziffer 18 einem Drehzahlvergleich 19 der Zentral-Einheit 13 zugeführt. Dem Drehzahlvergleich 19 wird von einem Soll-Drehzahlspeicher 21 die dort eingestellte Solldrehzahl eingegeben. Die Zentral-Einheit verarbeitet den Differenzwert zwischen Ist-Drehzahl und Soll-Drehzahl in Relation zu einer Pausenzeit, die an dem Teil 22 der Anordnung einstellbar und über die Leitung 23 der Zentral-Einheit zuführbar ist. Die jeweils eingestellte Pausen-Zeit und die nachstehend noch näher zu erläuternde Laufdauer der Einheit aus Motor und Pumpenaggregat setzen sich zu der Gesamtzeit eines Zyklus zusammen. Das Ergebnis der vorgenannten Auswertung durch die Zentral-Einheit wird über eine Leitung 24 einem Regelkreis 25 zugeführt, der über den Leistungsteil 20 die Laufdauer der Motor-Pumpenaggregateinheit pro Zyklus einstellt. Die "Logik" oder Zentral-Einheit 13 wertet also die drei Komponenten: Ist-Drehzahl, Soll-Drehzahl (eingestellt) und Pausen-Zeit (einstellbar) aus und bestimmt dadurch mit großer Genauigkeit die für eine ordnungsgemäße Versorgung der Zentralschmieranlage mit Schmiermittel jeweils notwendige Laufdauer der Pumpe 3.

Falls die Drehzahl sich nicht unmittelbar aus dem Antriebsstrom des Motors herleiten läßt (Fig. 2 und 3) sondern anderweitig erfaßt wird (Fig. 4 und zugehörige Erläuterung), kann sie gemäß strichpunktiert angedeuteter Baueinheit 26 der Drehzahlerfassung 17 zugegeben werden. Ferner kann noch ein Taster 27 für Zwischenschmierung vorgesehen sein. Eine Zuführung 29 versorgt die Zentral-Einheit 13 mit Spannung bei eingeschalteter Zündung (Betriebsstunden-Erfassung).

Wie bereits erwähnt, ist die in Fig. 1 dargestellte und allgemein mit 28 umrissene Steuereinrichtung so gewählt und eingestellt (besonders gilt dies für deren Zentral-Einheit 13), daß bei einer Zunahme (Abnahme) der Drehzahl der Pumpe 3 sich deren Laufdauer verringert (vergrößert). Eine höhere Drehzahl der Einheit aus Motor 2 und Pumpe 3 bedeutet nämlich, daß die Belastung der Pumpe geringer geworden ist. Dies ermöglicht eine entsprechende Reduzierung der Laufdauer. Umgekehrt bedingt eine Drehzahlabnahme die Anforderung, die Laufdauer der Pumpe zu verlängern.

Fig. 2 zeigt rein schematisch die Pumpe 3 mit Antriebverbindung 4, Motor 2 und der Steuereinrichtung 28. In diesem Fall erfolgt, wie bereits anhand der Fig. 1 erläutert, über die Leitungen 11 eine Erfassung des Stromes und damit der Drehzahl des Motors 2 an die Steuereinrichtung 28. Dies zeigt näher Fig. 3 mit dem Stator 34, dem Kollektor 30 und der Wicklung 31 eines Reihenschluß-Gleichstrommotors. In eine Windung 32 der Wicklung ist eine Induktivität 33 eingebaut. Sobald die zugehörige Lamelle des Kollektors von der Kohle-Bürste erfaßt wird, gibt es in dieser Windung einen Stromabfall. Der Zeitunterschied zwischen zwei Stromabfällen ist ein direktes Maß für die Drehzahl, die dann gemäß Ziffer 16, 17 und 18 der Zentral-Einheit zugeführt wird.

Wie schematisch Fig. 4 zeigt, kann die Drehzahlerfassung auch in anderer Weise erfolgen, z.B. durch einen Näherungsschalter 34, der eine Induktivität trägt, in der durch einen mit dem Motor umlaufenden Nocken bei jedem Umlauf ein elektromagnetischer Impuls bewirkt wird. Dieser Impuls wird über den Teil 26 der Drehzahlerfassung 17 der Steuereinrichtung 28 zugeführt. Stattdessen könnte auch eine optische Erfassung der Drehzahl des Motors erfolgen und in gleicher Weise der Drehzahl-Erfassung 17 zugeführt werden.

Ein besonderer Vorteil der Anordnung nach der Erfindung besteht darin, daß sie sich selbsttätig auf die jeweiligen Betriebsverhältnisse einstelle. So wird in der Regel nach einer gewissen Betriebsdauer einer Zentralschmieranlage das Schmiermittel dünnflüssiger werden. Ebenso kann sich die Außentemperatur ändern, wenn z.B. ein solches Fahrzeug in den frühen Morgenstunden bei niedriger Temperatur gestartet wird und dann im Laufe des Tages sich die Außentemperatur erhöht. Bei solchen Fallgestaltungen wird sich jeweils die Belastung der Pumpe verringern und damit deren Drehzahl erhöhen. Dem wird durch eine stufenlose Verringerung der Laufdauer der Pumpe entsprochen.

Gemäß der Erfindung kann weiterhin an der Dauerstromerfassung 15 eine Einstellung des Dauerstromes auf einen Maximalwert vorgesehen werden, der nicht überschritten werden darf. Erreicht der Dauerstrom des Motors diesen Wert, so wird dies über die Leitung 39 dem Regelkreis 25 eingegeben und dieser regelt über den Leistungsteil 20 den in 15 vorgegebenen Maximalwert des Dauerstromes ein, z.B. durch einen Schaltregler, wodurch sich aufgrund der hohen Gegenlast eine entsprechende Herabsetzung der Drehzahl der Motor-Pumpeneinheit ergibt. Hierdurch wird das Schmiermittel mit entsprechend geringerer Geschwindigkeit dem Verteiler 5 und von dort systembedingt direkt oder indirekt den Leitungen 6 bis 9 zugeführt.

Alle dargestellten und erläuterten Merkmale, sowie ihre Kombinationen untereinander sind erfindungswesentlich, soweit sie nicht ausdrücklich als bekannt bezeichnet sind.

**Patentansprüche**

1. Anordnung aus Schmiermittelpumpe und deren elektrischen Antriebsmotor an einer oder für eine Zentralschmieranlage, sowie dazugehöriger Steuerung der Versorgung der Zentralschmieranlage mit der jeweils erforderlichen Schmiermittelmenge durch Änderung der Laufdauer der Schmiermittelpumpe, gekennzeichnet durch:

   a - eine Erfassung der Drehzahl der mit dem Antriebsmotor (2) schlupffrei auf Drehmitnahme verbundenen Schmiermittelpumpe (3),

   b - Einsatz eines in seiner Drehzahl von der jeweiligen Belastung durch die Schmiermittelpumpe (3) abhängigen Elektromotors (2),

   c - eine Steuereinrichtung (28) mit einem Aufbau und einer Einstellung derart, daß bei Zunahme (Abnahme) der Drehzahl der Einheit aus Antriebsmotor (2) und Pumpe (3) sich die Laufdauer dieser, die Pumpe mit umfassenden Einheit verringert (vergrößert).

**2.**  Anordnung nach Anspruch 1, gekennzeichnet durch eine derart eingestellte bzw. einstellbare Steuereinrichtung (28) derart, daß die Dauer einer Pausenzeit zwischen zwei Arbeitsperioden der Schmiermittelpumpe (3) auf einen jeweils gewünschten Wert einstellbar ist.

**3.**  Anordnung nach Anspruch 1 oder 2, dadurch gekennzeichnet, daß die Mittel zur Drehzahlerfassung am Antriebsmotor (2), oder der Triebverbindung (4) zwischen Motor und Pumpe oder an der Pumpe vorgesehen sind.

**4.**  Anordnung nach einem der Ansprüche 1 bis 3, dadurch gekennzeichnet, daß der Antriebsmotor ein Gleichstrom-Reihenschlußmotor (2) ist.

**5.**  Anordnung nach Anspruch 4, dadurch gekennzeichnet, daß eine Windung (32) der Wicklung des Gleichstrom-Reihenschlußmotors eine zusätzliche Induktivität (33) aufweist und daß der hierdurch pro Kollektorumdrehung erzeugte Stromabfall einer Dauerstrom- und Drehzahlerfassung (15, 17) der Steuereinrichtung (28) zugeführt wird.

**6.**  Anordnung nach einem der Ansprüche 1 bis 4, dadurch gekennzeichnet, daß für die Drehzahlerfassung ein Näherungsschalter (34) vorgesehen ist, der Mittel zur Erzeugung eines elektromagnetischen Impulses aufweist und daß dieser Impuls der Zentral-Einheit (13) der Steuereinrichtung (28) zugeführt wird (35, 26).

**7.**  Anordnung nach einem der Ansprüche 1 bis 4, gekennzeichnet durch eine optische Erfassung der Drehzahl der Einheit aus Motor und Pumpe und deren Zuführung (26) zur Zentral-Einheit (13) der Steuereinrichtung (28).

**8.**  Anordnung nach einem der Ansprüche 1 bis 7, gekennzeichnet durch eine Erfassung (15) des Dauerstromes des Elektromotors (2) und durch eine Ausgestaltung der Steuereinrichtung (28) derart, daß sie über einen Regelkreis (25) und einen Leistungsteil (20) den Dauerstrom auf einen einstellbaren Maximalwert begrenzt.

# Fig.1

EP 0 469 398 A1

# F i g.2

# F i g.4

# Fig.3

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-344 435 (BAIER & KÖPPEL) | 1-3,6 | F16N29/02 |
| Y | * das ganze Dokument * | 4,7 | F16N7/38 |
|  | --- |  | F04B13/00 |
| Y | DE-A-2 144 096 (SHERWOOD) | 4 |  |
| A | * Seite 12; Abbildungen * | 5 |  |
|  | --- |  |  |
| Y | US-A-4 336 000 (JORGENSEN) | 7 |  |
|  | * Spalte 5, Zeile 41 - Zeile 61; Abbildungen * |  |  |
|  | --- |  |  |
| A | US-A-3 981 620 (ABRAHAMS ET AL.) |  |  |
|  | ----- |  |  |

|  |
|---|
| **RECHERCHIERTE SACHGEBIETE (Int. Cl.5 )** |
| F16N<br>F04B |

Der vorliegende Recherchenbericht wurde für alle Patentansprüche erstellt

| Recherchenort | Abschlußdatum der Recherche | Prüfer |
|---|---|---|
| DEN HAAG | 17 OKTOBER 1991 | KOOIJMAN F.G.M. |